# EUROPÄISCHE PATENTSCHRIFT

(11) **EP 1 865 211 B1**
(45) Veröffentlichungstag und Bekanntmachung des Hinweises auf die Patenterteilung: **25.02.2009**
(21) Anmeldenummer: 07006524.8
(22) Anmeldetag: 29.03.2007
(51) Int. Cl.: F16C 1/20, F16G 9/00, D07B 1/06, D07B 1/16

(54) **Seilzugelement für Bowdenzüge**
Pulley element for Bowden cables
Elément de commande de câble pour câbles Bowden

(30) Priorität: 07.06.2006 DE 102006026740
(43) Veröffentlichungstag der Anmeldung: 12.12.2007
(73) Patentinhaber: HEW-KABEL /CDT GmbH & Co. KG, 51688 Wipperfürth (DE)
(72) Erfinder: Dlugas, Wolfgang, 51688 Wipperfürth (DE); Hembach, Heribert, 51688 Wipperfürth (DE)
(74) Vertreter: Mende, Eberhard

(56) Entgegenhaltungen:
- US-A- 5 636 551
- US-B1- 6 884 481

## Beschreibung

Die vorliegende Erfindung betrifft ein Seilzugelement, allein oder als Teil eines Bowdenzuges, bestehend aus einem Drahtseil, vorzugsweise aus einzelnen miteinander verseilten oder miteinander verwürgten Stahldrähten, das eine äußere polymere Beschichtung aus einem Polytetrafluorethylen aufweist, wie in der US 5 636 551 beschrieben.

Seilzugelemente oder Bowdenzüge zur Übermittlung von Druck- und Zugkräften oder von Verschiebungen bei der Betätigung von Funktionsteilen, etwa Stellgliedern von Heizungs-, Lüftungs- oder Klimareglern in Kraftfahrzeugen oder zur Betätigung von Bremsen bei Zweirädern oder zur Übertragung von Kräften z.B. auf Klappen oder Hebeln bei Maschinen beliebiger Art, sind hinlänglich bekannt (DE-OS 43 21 544, DE-OS 103 20 677). Im Markt angeboten werden Bowdenzüge aber auch für den Einsatz in der Elektrotechnik und Feinmechanik, für den Einsatz in der Hausgeräte- und Sanitärtechnik sowie für die Unterhaltungselektronik.

In allen den genannten Fällen kommt es vor allem darauf an, das kraftübertragende Seilelement, in der Regel ein Stahldrahtseil, in einem umgebenden Stützrohr möglichst reibungsfrei zu führen.
So ist es beispielsweise bekannt (US 2002/0117323), das blanke Stahldrahtseil im Innern eines Führungsrohres aus mikroporösem Polytetrafluorethylen (PTFE) anzuordnen. Das PTFE des Führungsrohres soll dessen Standzeit während des Betriebes erhöhen, die Porosität des Führungsrohres dient im wesentlichen dazu, ein Gleit oder Schmiermittel aufzunehmen, das die Beweglichkeit des Stahldrahtseiles im Führungsrohr fördert. Das Stahldrahtseil kann aber auch zunächst mit einem Fluorpolymerkleber beschichtet sein, der von einer äußeren Schicht aus einem porösen Polytetrafluorethylen umschlossen ist. Als äußere Hülle dient ein Stützrohr aus PTFE (US 5 636 551).

Bei einer anderen bekannten Seilhülle für Bowdenzüge (EP 0 982 505) hat man auch bereits aus Reibungs- und Wartungsgründen eine Beschichtung des Drahtseiles vorgesehen, das in einem Stützschlauch lose geführt ist. Die Beschichtung besteht aus einem Polyetheretherketon (PEEK), das auf die Oberfläche des Drahtseiles nach der Extrusion beim Erkalten aufschrumpft.

In neuerer Zeit werden an die Bowdenzüge immer höhere Anforderungen gestellt, das betrifft vor allem die Gleitfähigkeit der Seilzugelemente in solchen Bowdenzügen, aber auch den Korrosionsschutz und die Unempfindlichkeit der verwendeten Kunststoffe gegen aggressive Medien. Diese Forderungen werden von den bekannten Seilzugelementen und Bowdenzügen nur bedingt erfüllt.

Ausgehend von dem bekannten Stand der Technik liegt daher der Erfindung die Aufgabe zugrunde, ein Seilzugelement allein oder für den Aufbau eines Bowdenzuges so zu gestalten, dass die Forderungen nach verbesserter Gleitfähigkeit, hoher mechanischer Stabilität und Korrosionsbeständigkeit auch in der Umgebung chemisch aggressiver Medien erfüllt werden.

Erreicht wird dies gemäß der Erfindung dadurch, dass die PTFE Beschichtung des Drahtseiles aus zwei Einzelschichten besteht, von denen die unmittelbar auf dem Drahtseil befindliche erste Schicht aus einem modifizierten Polytetrafluorethylen besteht. Wie aus dem Stand der Technik schon bekannt, weist dieser Fluorkunststoff besonders geringe Reibungsverluste auf, er ist korrosionsbeständig auch in einer aggressiven Atmosphäre. Aufgrund der hohen mechanischen Festigkeit ist das PTFE der Umhüllung problemlos in der Lage, die einzelnen Stahldrähte des Seilzuges in ihrer durch die Verseilung vorgegebenen Position zu fixieren. Das gilt auch dann, wenn, wie bei solchen Seilzügen üblich, das Seilzugelement auf eine bestimmte Länge abgelängt werden muß. Ein unbeabsichtigtes Aufkorben oder Aufspleißen der verseilten oder verwürgten Einzeldrähte ist in jedem Fall vermieden.
Darüberhinaus ergibt sich durch die Erfindung eine dauerhafte form- und kraftschlüssige Verbindung zwischen der Oberfläche des Drahtseiles und der äußeren Beschichtung. Ein modifiziertes Polytetrafluorethylen bedeutet für die vorliegende Erfindung ein Gemenge aus PTFE und einem thermoplastischen Polymer. Mit Vorteil enthält ein solches Gemenge 1-10 Gew.%, vorzugsweise 3-6 Gew.% eines thermoplastischen Polymers.

Da das Polytetrafluorethylen bekanntlich eine sehr hohe Dauertemperaturbeständigkeit aufweist, ist in Durchführung der Erfindung vorgesehen, auch für die Mischungskomponente einen hochwärmebeständigen thermoplastischen Kunststoff zu verwenden. Das können z.B. thermoplastisch verformbare Fluorpolymere sein, etwa auf der Basis von Polyvinylidenfluorid und Polytrifluorchlorethylen, oder von thermoplastischen Copolymeren des Vinylidenfluorids und des Trifluorchlorethylens. Geeignet sind aber auch solche Fluorpolymere auf der Basis von Copolymeren des Tetrafluorethylens mit Ethylen, Hexafluorpropylen sowie Perfluor(alkylvinyl)ethern mit Perfluoralkylresten von 1 bis 10 Kohlenstoffatomen, insbesondere mit Perfluor(propylvinyl)ether. Wie ausgeführt, kommt es für die Erfindung auf ein Gemisch oder ein Gemenge mit Polytetrafluorethylen an. Es kann daher oft zweckmäßig sein, von Vorprodukten der genannten Materialien auszugehen, also von solchen Produkten, die als Polymerisate unmittelbar aus dem Reaktor anfallen.

Andere für die Erfindung geeignete Mischungskomponenten des PTFE Gemenges können ein Polysulfon, ein Polyetherimid oder ein Polyethersulfon, aber auch ein Polyetherketon (PEK) sein. Ebenso kann das für eine komplette Beschichtung des Stahldrahtseiles bereits aus der EP-PS 0 982 505 bekannte Polyetheretherketon (PEEK) eine vorteilhafte Anwendung finden, wenn es als Mischungskomponente dem PTFE in einer Menge von beispielsweise 3-6 Gew.% zugegeben wird.

Eine besonders vorteilhafte Ausführungsform der Erfindung ergibt sich jedoch dann, wenn dem Polytetrafluorethylen als Mischungskomponente ein Polyphenylensulfid (PPS) in einer Menge von 2-6 Gew.% zugegeben wird. Dieser Werkstoff zeichnet sich vor allem durch eine hohe mechanische Festigkeit und Formbeständigkeit in der Wärme aus, durch eine geringe Feuchtigkeitsaufnahme sowie hohe Beständigkeit gegen den Angriff durch Chemikalien. Mit diesem Eigenschaftsbild ist das PPS besonders geeignet, zusammen mit der überwiegenden PTFE Komponente einen dauerhaft verschleißfesten und reibungsarmen Überzug auf dem Stahldrahtseil eines Bowdenzuges zu gewährleisten.

Nach der Erfindung ist die Umhüllung des Drahtseiles, nicht das Führungsrohr für das Drahtseil, zweischichtig aufgebaut. Dabei ist für die Erfindung wesentlich, dass die beiden Schichten kraft- und formschlüssig miteinander verbunden sind, also eine kompakte Einheit bilden. Um das zu erreichen, sieht die Erfindung ein Verfahren zur Herstellung einer Beschichtung vor, bei dem zunächst aus einem PTFE Pulver und einem Gleit- oder Schmiermittel durch sog Pastenextrusion ein zylindrischer Formkörper mit einer zentralen Bohrung hergestellt wird. Aus einem Polymergemenge aus PTFE und einem thermoplastischen hochwärmebeständigen Polymer, mit Vorteil einem PPS, wird unter Zusatz der üblichen Gleit- oder Schmiermittel ein zweiter zylindrischer Formkörper mit einer zentralen Bohrung wiederum durch Pastenextrusion erzeugt und in die entsprechend bemessene Bohrung des ersten Formkörpers eingeführt. In die entsprechend den äußeren Abmessungen des Drahtseiles bemessene Bohrung des zweiten Formkörpers wird das Drahtseil eingeführt und schließlich werden beide konzentrischen Formkörper gemeinsam auf das Drahtseil zur Bildung zweier form- und kraftschlüssig miteinander verbundener Einzelschichten aufextrudiert.
Das Polytetrafluorethylen der beiden Schichten wird in Weiterführung der Erfindung nach der Extrusion der beiden Formkörper auf das Drahtseil gleichzeitig gesintert, wobei das durch die Temperaturerhöhung während des Sinterprozesses an- oder aufschmelzende thermoplastische Polymer Haftbrücken zur äußeren Umfläche des Drahtseiles bildet. Damit ist eine dauerhafte, mechanisch feste und dichte Verbindung zwischen dem Drahtseil und seiner Beschichtung aus dem Polytetrafluorethylen mit besonders günstigen Gleiteigenschaften gewährleistet. Zweckmäßig wird die Wanddicke der zweiten Schicht aus dem durch Zumischung eines thermoplastischen Kunststoffes modifizierten Polytetrafluorethylen etwa 30 - 60% der Wanddicke der gesamten PTFE Beschichtung des Drahtseiles betragen.

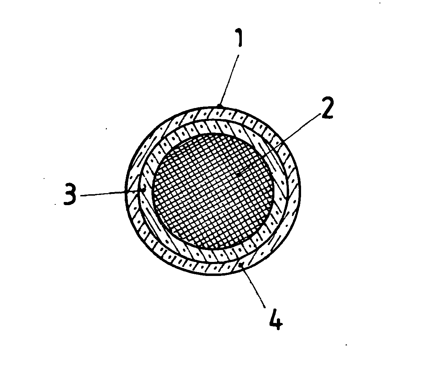

Die Erfindung sei an Hand des in der Figur als Ausführungsbeispiel dargestellten Seilzugelementes näher erläutert.

Das in der Figur dargestellte Seilzugelement 1 kann in dieser Ausführungsform allein zum Einsatz kommen, vorzugsweise wird man es jedoch als zentrales oder weiteres Aufbauelement für Bowdenzüge einsetzen, beispielsweise in einem konzentrischen Führungs- oder Stützrohr.
Das Drahtseil 2 besteht aus einer Vielzahl miteinander verseilter oder verwürgter Stahldrähte, mit Vorteil aus einem rostfreien Stahl. Das Drahtseil 2 ist beschichtet mit einer inneren PTFE Umhüllung 3 und einer äußeren PTFE Umhüllung 4, wobei das PTFE der Umhüllung 3 durch Beimischung eines thermoplastischen Kunststoffes zum PTFE Pulver vor der Pastenextrusion modifiziert ist. Die beiden PTFE Umhüllungen 3 und 4 bilden im aufextrudierten und anschließend gesinterten Zustand miteinander eine kompakte Einheit ohne Spaltbildung an der Grenzfläche zwischen beiden Umhüllungen. Ebenso sind beide Umhüllungen 3 und 4 dauerhaft form- und kraftschlüssig mit dem Drahtseil 2 verbunden. Das Seilzugelement 1 nach der Erfindung ist korrosionsgeschützt, die verseilten Stahldrähte des Drahtseiles 2 sind durch die mechanisch feste Umhüllung aus PTFE sicher fixiert und das Seilzugelement 1 ist durch die PTFE Umhüllung 4 gegenüber einer äußeren Umgebung, etwa der inneren Umfläche des Stützrohres eines Bowdenzuges, extrem gleitfähig.

Entsprechend den verschiedenen Anwendungsbereichen werden die äußeren Abmessungen eines nach der Erfindung ausgebildeten Seiltzugelementes unterschiedlich sein. Das in der Figur als Ausführungsbeispiel dargestellte Seilzugelementl weist einen Außendurchmesser von 2,6 mm auf, mit einem Durchmesser des Drahtseiles 2 von 1,5 mm. Dieses Seilzugelement 1 ist für einen Temperaturbereich von -190° C bis +260° C Dauerbetriebstemperatur geeignet und deshalb auch dort einsetzbar, wo mit erhöhten oder sehr tiefen Temperaturen gerechnet werden muß.

## Patentansprüche

1. Seilzugelement (1), allein oder als Teil eines Bowdenzuges, bestehend aus einem Drahtseil (2), vorzugsweise aus einzelnen miteinander verseilten oder miteinander verwürgten Stahldrähten, das eine äußere polymere Beschichtung (3,4) aus Polytetrafluorethylen (PTFE) aufweist, **dadurch gekennzeichnet, dass** die Polytetrafluorethylen Beschichtung (3,4) des Drahtseiles (2) aus zwei Einzelschichten besteht, von denen die unmittelbar auf dem Drahtseil (2) befindliche erste Schicht (3) aus einem durch ein thermoplastisches Polymer modifizierten Polytetrafluorethylen besteht.

2. Seilzugelement nach Anspruch 1, **dadurch gekennzeichnet, dass** als modifiziertes Polytetrafluorethylen ein Polymergemenge aus PTFE und 1-10 Gew.%, vorzugsweise 3-6 Gew.%, eines thermoplastisches Polymers dient.

3. Seilzugelement nach Anspruch 2, **dadurch gekennzeichnet, dass** das thermoplastische Polymer ein hochwärmebeständiger Kunststoff ist.

4. Seilzugelement nach Anspruch 3, **dadurch gekennzeichnet, dass** der hochwärmebeständige Kunststoff ein thermoplastisch verformbares Fluorpolymer ist.

5. Seilzugelement nach Anspruch 3, **dadurch gekennzeichnet, dass** der hochwärmebeständige Kunststoff ein Polyphenylensulfid (PPS) ist.

6. Seilzugelement nach Anspruch 3, **dadurch gekennzeichnet, dass** der hochwärmebeständige Kunststoff ein Polysulfon oder ein Polyethersulfon ist.

7. Seilzugelement nach Anspruch 3, **dadurch gekennzeichnet, dass** der hochwärmebeständige Kunststoff ein Polyetherketon (PEK) ist.

8. Seilzugelement nach Anspruch 3, **dadurch gekennzeichnet, dass** der hochwärmebeständige Kunststoff ein Polyetheretherketon (PEEK) ist.

9. Seilzugelement nach Anspruch 3, **dadurch gekennzeichnet**, das der hochwärmebeständige Kunststoff ein Polyetherimid ist.

10. Seilzugelement nach Anspruch 1 oder einem der folgenden, **dadurch gekennzeichnet, dass** die Wanddicke der ersten Schicht (3) aus dem modifizierten Polytetrafluorethylen etwa 30-60% der Wanddicke der gesamten PTFE Beschichtung (3,4) des Drahtseiles (2) beträgt.

11. Verfahren zur Herstellung eines Seilzugelementes (1) aus einem Drahtseil (2) mit äußerer polymerer Beschichtung (3,4) nach Anspruch 1 oder einem der folgenden, **dadurch gekennzeichnet, dass** aus einem PTFE Pulver und einem Gleit- oder Schmiermittel durch sog. Pastenextrusion zunächst ein zylindrischer Formkörper mit einer zentralen Bohrung hergestellt, aus einem Polymergemenge aus PTFE und einem thermoplastischen Polymer unter Zusatz von Gleit - oder Schmiermitteln ein zweiter zylindrischer Formkörper mit einer zentralen Bohrung wiederum durch Pastenextrusion erzeugt und in die entsprechend bemessene Bohrung des ersten Formkörpers eingeführt wird, dass in die Bohrung des zweiten Formkörpers das Drahtseil (2) eingeführt, und dass anschließend beide konzentrischen Formkörper gemeinsam auf das Drahtseil (2) zur Bildung zweier form- und kraftschlüssig miteinander verbundener Einzelschichten (3,4) aufextrudiert werden.

12. Verfahren nach Anspruch 11, **dadurch gekennzeichnet, dass** das Polytetrafluorethylen der beiden Schichten (3,4) nach der Extrusion der beiden Formkörper auf das Drahtseil (2) gleichzeitig gesintert wird, wobei das durch die Temperaturerhöhung während des Sinterprozesses an- oder aufschmelzende thermoplastische Polymer Haftbrücken zur äußeren Umfläche des Drahtseiles (2) bildet.

## Claims

1. Cable control element (1), alone or as part of a Bowden cable, consisting of a wire cable (2), preferably of individual steel wires twisted with one another or bunched together, which wire cable has an outer polymeric coating (3, 4) comprising polytetrafluoroethylene (PTFE), **characterized in that** the polytetrafluoroethylene coating (3, 4) of the wire cable (2) consists of two individual layers, of which the first layer (3) present directly on the wire cable (2) consists of a polytetrafluoroethylene modified by a thermoplastic polymer.

2. Cable control element according to Claim 1, **characterized in that** a polymer mixture comprising PTFE and 1-10% by weight, preferably 3-6% by weight, of a thermoplastic polymer serves as the modified polytetrafluoroethylene.

3. Cable control element according to Claim 2, **characterized in that** the thermoplastic polymer is a highly heat-resistant plastic.

4. Cable control element according to Claim 3, **characterized in that** the highly heat-resistant plastic is a thermoplastically deformable fluoropolymer.

5. Cable control element according to Claim 3, **characterized in that** the highly heat-resistant plastic is a polyphenylene sulphide (PPS).

6. Cable control element according to Claim 3, **characterized in that** the highly heat-resistant plastic is a polysulphone or a polyethersulphone.

7. Cable control element according to Claim 3, **characterized in that** the highly heat-resistant plastic is a polyetherketone (PEK).

8. Cable control element according to Claim 3, **characterized in that** the highly heat-resistant plastic is a polyetheretherketone (PEEK).

9. Cable control element according to Claim 3, **characterized in that** the highly heat-resistant plastic is a polyetherimide.

10. Cable control element according to Claim 1 or any of the following claims, **characterized in that** the wall thickness of the first layer (3) comprising the modified polytetrafluoroethylene is about 30-60% of the wall thickness of the total PTFE coating (3, 4) of the wire cable (2).

11. Process for the production of a cable control element (1) comprising a wire cable (2) having an outer polymeric coating (3, 4) according to Claim 1 or any of the following claims, **characterized in that** first a cylindrical moulding having a central bore is produced from a PTFE powder and a lubricant by so-called paste extrusion, a second cylindrical moulding having a central bore is produced, once again by paste extrusion, from a polymer mixture comprising PTFE and a thermoplastic polymer with addition of lubricants and is introduced into the appropriately dimensioned bore of the first moulding, **in that** the wire cable (2) is inserted into the bore of the second moulding, and **in that** the two concentric mouldings are then extruded together onto the wire cable (2) for the formation of two interlocking and frictionally locking individual layers (3, 4).

12. Process according to Claim 11, **characterized in that** the polytetrafluoroethylene of the two layers (3, 4) is simultaneously sintered after the extrusion of the two mouldings onto the wire cable (2), the thermoplastic polymer partly melting or completely melting as a result of the temperature increase during the sintering process forming adhesive bridges to the outer circumferential surface of the wire cable (2).

## Revendications

1. Elément de câble de traction (1) pris seul ou comme partie d'un câble Bowden, composé d'un câble en fils (2) de préférence formé de fils d'acier simples, tressés ou toronnés, muni d'un revêtement de polymère (3, 4) extérieur en polytétrafluoréthylène (PTFE),
**caractérisé en ce que**
le revêtement en polytétrafluoréthylène (3, 4) du câble en fils (2) se compose de deux couches individuelles dont la première couche (3) qui se trouve directement sur le câble en fils (2) est en un polytétrafluoréthylène modifié par un polymère thermoplastique.

2. Elément de câble de traction selon la revendication 1,
**caractérisé en ce que**
le polytétrafluoréthylène modifié est un mélange polymère de PTFE et de 1 % à 10 % pondéraux et de préférence 3 % à 6 % pondéraux d'un polymère thermoplastique.

3. Elément de câble de traction selon la revendication 2,
**caractérisé en ce que**
le polymère thermoplastique est une matière plastique très résistante à la chaleur.

4. Elément de câble de traction selon la revendication 3,
**caractérisé en ce que**
la matière plastique très résistante à la chaleur est un polymère fluoré déformable plastiquement.

5. Elément de câble de traction selon la revendication 3,
**caractérisé en ce que**
la matière plastique très résistante à la chaleur est un sulfure de polyphénylène (PPS).

6. Elément de câble de traction selon la revendication 3,
**caractérisé en ce que**
la matière plastique très résistante à la chaleur est un polysulfone ou un polyéthersulfone.

7. Elément de câble de traction selon la revendication 3,
**caractérisé en ce que**
la matière plastique très résistante à la chaleur est une polyéthercétone (PEC).

8. Elément de câble de traction selon la revendication 3,
**caractérisé en ce que**
la matière plastique très résistante à la chaleur est une polyétheréthercétone (PEEC).

9. Elément de câble de traction selon la revendication 3,
**caractérisé en ce que**
la matière plastique très résistante à la chaleur est un polyétherimide.

10. Elément de câble de traction selon la revendication 1 ou l'une des revendications suivantes,
**caractérisé en ce que**
l'épaisseur de paroi de la première couche (3) en polytétrafluoréthylène modifié représente environ 30 % et 60 % de l'épaisseur de paroi de l'ensemble du revêtement PTFE (3, 4) du câble (2).

11. Procédé de fabrication d'un élément de câble de traction (1) en un câble de fils (2) ayant un revêtement polymère extérieur (3, 4) selon la revendication 1 ou l'une des revendications suivantes,
**caractérisé en ce qu'**
on réalise tout d'abord à partir d'une poudre PTFE et d'un agent lubrifiant ou d'un agent antifriction et par extrusion pâteuse, un corps moulé cylindrique ayant un perçage central produit à partir d'un mélange polymère de PTFE et d'un polymère thermoplastique avec addition d'agent lubrifiant ou d'agent antifriction, et de nouveau par extrusion pâteuse un second corps moulé, cylindrique, ayant un perçage central, et on l'introduit dans le perçage de dimension correspondante du premier corps moulé, on introduit le câble (2) dans le perçage du second corps moulé, et
ensuite, on extrude ensemble les deux corps moulés concentriques, sur le câble (2) pour former deux couches individuelles (3, 4) reliées l'une à l'autre par une liaison par la forme et par la force.

12. Procédé selon la revendication 11,
**caractérisé en ce qu'**
après extrusion des deux corps moulés sur le câble (2), on effectue en même temps le frittage du polytétrafluoréthylène des deux couches (3, 4), le polymère thermoplastique fondant ou commençant à fondre suite à l'élévation de la température pendant le processus de frittage formant des ponts d'accrochage avec la surface périphérique extérieure du câble (2).
